# EUROPEAN PATENT APPLICATION

(11) **EP 0 571 634 A1**
(43) Date of publication of application: **01.12.1993**
(21) Application number: 92923989.5
(22) Date of filing: 20.11.1992
(51) Int. Cl.: B23Q 3/12, B23B 31/117

(54) **HOLDING STRUCTURE OF TOOL HOLDER**

(30) Priority: 04.12.1991 JP 347697/91
(71) Applicant: KITAMURA MACHINERY CO., LTD., Takaoka-shi, Toyama-ken 939-11 (JP)
(72) Inventor: KITAMURA, Takayoshi, Takaoka-shi Toyama-ken 939-11 (JP)
(74) Representative: Schöndorf, Jürgen
(86) International application number: PCT/JP92/01517
(87) International publication number: WO 93/10942

(57) **Abstract**

A holding structure of a tool holder (10) for restraining vibration of the tool holder caused by expansion of a setting portion (11) of the tool holder when a spindle (20) rotates at high speed wherein a taper portion (12) of a large diameter is provided on the setting portion (11) of the tool holder, wherein a straight portion (14) of a small diameter is provided on the setting portion (11) of the tool holder at a portion thereof close to a pull stud bolt (15), wherein a relief portion (13) is provided between the taper portion (12) and the straight portion (14), wherein a taper holding portion (22) and a straight holding portion (24) corresponding to the taper portion (12) end the straight portion (14) of the tool holder, respectively, are provided on a holding portion (21) of the spindle, wherein an intermediate portion (23) is provided between the taper holding portion (22) and the straight holding portion (24), and wherein the tool holder (10) is held in the spindle (20) in such a manner that the intermediate portion (23) and the relief portion (13) are not brought into contact with each other.

## Description

### Technical Field

This invention relates to a tool holder coupling apparatus for attaching a tool holder to a machine spindle.

### Background

A tool holder normally comprises a tool, a taper portion and a pull stud bolt. When the tool holder is attached to a machine spindle, the pull stud bolt is drawn by way of a collet chuck in a preloading manner. The taper portion of the conventional tool holder is defined by a single continuous smooth taper surface. A reception opening for receiving the taper portion of the tool holder is formed on the machine spindle. The reception opening of the machine spindle is defined by a single continuous smooth taper surface. The tool holder is attached to the machine spindle in such a manner that the taper portion of the tool holder entirely engages with the corresponding taper surface of the reception opening of the spindle.

Nowadays a work to be machined is often made of aluminum, non-ferrous metal containing resins, hard alloy and so on. In this case high speed cutting or very high speed cutting is performed, wherein the tool must be driven at high rotation rate. Even when a normal metal workpiece is machined, high speed cutting is desirable for accurate machining.

When the tool holder attached to the machine spindle is driven at high rotation rate, an entry area (having large diameter) of tapered reception opening of the spindle is enlarged, for instance by few micron meters. As the result only a small diameter (end) area of the tapered support portion engages with the reception opening of the spindle, therefore a play of the tool sometimes occurs during machining operation. Such a play of the tool is caused by the fact that a little clearance is generated at the large diameter area of the reception opening of the spindle whereas the small diameter area is hardly enlarged ,consequentry the tool holder is supported by only its small diameter area of the support portion. It is hard to machine a workpiece with high accuracy if such a tool play occurs. The play will also cause the tool life shorter. Moreover, no severe cutting conditions can be sellected because of the play, so the productivity cannot be improved.

### Summary of the Invention

An object of the invention is to overcome the above-stated problems of the prior art and provide a tool holder coupling apparatus wherein no play of the tool holder (or tool) occurs even when driven at high rotation rate so that high accuracy machining can be performed.

In accordance with the invention provided is a tool holder coupling apparatus for attaching a tool holder to a machine spindle, wherein the tool holder comprises a support part to be supported and a pull stud bolt, the support part having a taper portion of large diameters, a straight portion of a small diameter near the pull stud bolt, and a relief portion between the taper portion and the straight portion, and wherein the machine spindle comprises a reception opening, the reception opening having a taper reception portion corresponding to the taper portion of the tool holder, a straight reception portion corresponding to the straight portion of the tool holder, and a middle portion between the taper reception portion and the straight reception portion, and wherein the tool holder is to be attached to the machine spindle in such a manner that the relief portion of the tool holder disengages with the middle portion of the machine spindle.

### Brief Description of the Drawings

Fig.1 is a sectional view showing an embodiment according to the invention; and
Fig.2 is a sectional view showing a further embodiment according to the invention.

### Detailed Description of the Preferred Embodiments

Embodiments according to the invention will be explained with reference to the drawrings.

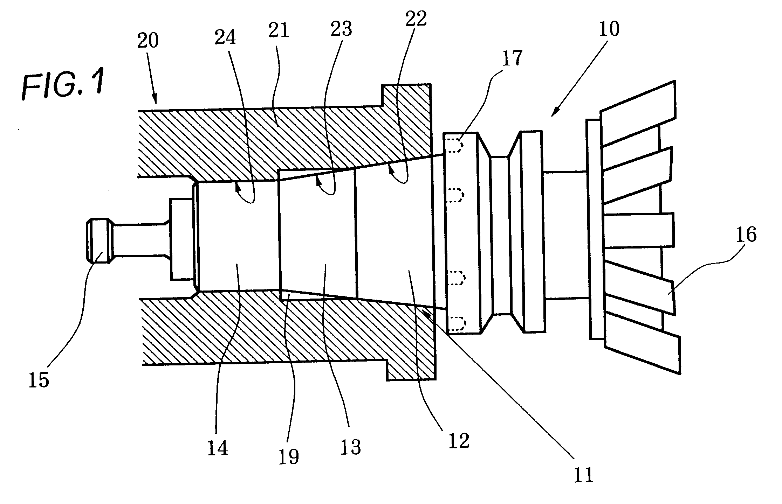

Fig.1 is a sectional view showing an embodiment of a tool holder coupling apparatus 1 according to the invention. A tool 16 is mounted at one end of a tool holder 10. A normal pull stud bolt 15 is attached at the other end of the tool holder 10. Between the tool 16 and the pull stud bolt 15 a support part to be supported by a machine spindle 21 is formed.

The support part 11 is devided into three portions. The support part 11 has a taper or short taper portion 22 near the tool. The short taper portion 22 is defined by a single continuous taper surface extending axially over approximately 1/3 of the axial length of the the support part 11. The support part 11 has a straight portion 14 near the pull stud bolt 15. The straight portion 14 is defined by a single cylindrical surface having approximately the same axial length as the short taper portion 12. The diameter of the straight portion 14 is smaller than the smallest diameter of the short taper portion 12. The support part has a relief portion 13 between the short taper portion 12 and the straight portion 14. The relief portion 13 is defined by a single taper surface. A step is formed in discontinuous manner between the relief portion 13 and the short taper portion 12. The tool holder 10 has 6-8 balance holes.

A machine spindle 20 of, for instance, a machining center, has at its end a reception opening 21. At the back of the reception opening 21 a conventional draw bar and a conventional collet chuck are located, but not shown in the drawing.

The reception opening 21 has three portions. The reception opening 21 has a taper reception portion or short taper reception portion 22 formed at entrance thereof. The short taper reception portion 22 is defined by a taper surface corresponding to that of the short taper portion 12. The short taper portion 12 of the tool holder is to be engaged with the short taper reception portion 22 in coupling condition. A middle portion 23 is formed adjacent to the short taper reception portion 22. The middle portion 23 is located so as to correspond to the relief portion 13 of the tool holder. When the tool holder 10 is attached to the spindle 20, the middle portion 23 disengages with the relief portion 13 and a gap is formed 19 between them. A straight reception portion 24 is formed next to the middle portion 23. The straight reception portion 24 is defined by a cylindrical inner surface correspoinding to the straight portion 14 of the tool holder so as to engage with the same.

When driven at high rotation rate and the taper reception portion 22 is enlarged, the tool holder 10 slides slightly toward the pull stud bolt 15. It is resulted from the fact that an interaction is caused between the straight portion 14 of the tool holder and the straight reception portion 24 of the spindle. This relief, as it is called, allows the taper portion 12 of the tool holder to be closely supported on the taper reception portion 22 of the spindle. Therefore the tool holder 10 hardly plays when driven at high rotation rate, and high accuracy machining can be performed.

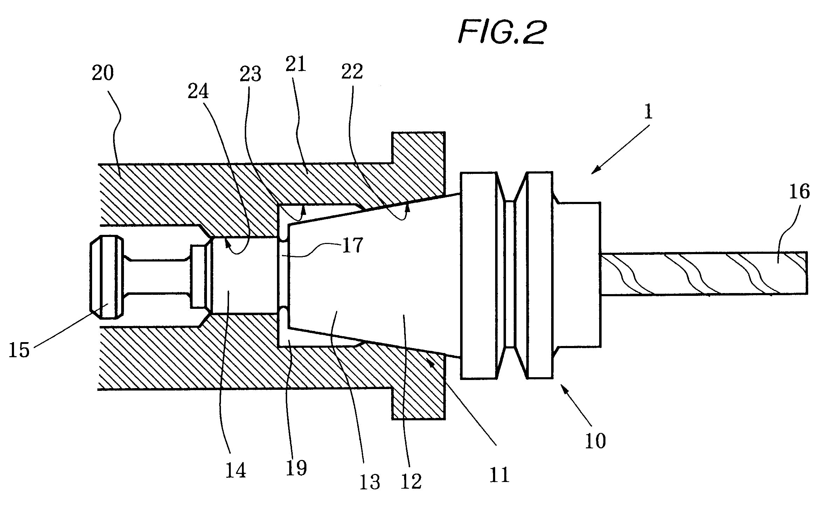

Next a further embodiment according to the invention will be explained with reference to Fig.2. Only difference between the embodiments shown in Figs.1 and 2 will be explained. In the embodiment of Fig.2, the short taper portion 12 and the relief portion 13 of the tool holder 10 are defined by a common continuous taper surface without any steps. In this case an area to be engaged with a short taper reception portion 22 is regarded as the short taper portion 12. Whereas an area corresponding to the middle portion 23 of the spindle and to be disengaged therewith is regarded as the relief portion 13. Thus the short taper portion 13 and the middle portion 23 can be continuous. An annular channel 17 is formed between the relief portion 13 and the straight portion 14.

According to the tool holder coupling apparatus of the invention, when the spindle is driven at high rotation rate and a gap is caused between the taper reception portion of the spindle and the taper portion of the tool holder, the tool holder can slightly slide in the inner direction or toward the pull stud bolt. This is because the straight portion of the tool holder can slide in said direction. Since the taper portion of the tool holder is surely supported by the spindle. Therfore the play of the tool hardly occurs, and high accuracy machining can be performed. And the taper portion of the tool holder is closely engaged with the spindle, so in case of heavy cutting high accuracy machining can be performed. Therefore machining productivity can be improved.

## Claims

1. A tool holder coupling apparatus for attaching a tool holder to a machine spindle, wherein the tool holder (11) comprises a support part (11) to be supported and a pull stud bolt (15), the support part (11) having a taper portion (12) of large diameters, a straight portion (14) of a small diameter near the pull stud bolt (15), and a relief portion (13) between the taper portion (12) and the straight portion (14), and wherein the machine spindle (20) comprises a reception opening (21), the reception opening (21) having a taper reception portion (22) corresponding to the taper portion (12) of the tool holder (10), a straight reception portion (24) corresponding to the straight portion (14) of the tool holder (10), and a middle portion (23) between the taper reception portion (22) and the straight reception portion (24), and wherein the tool holder (10) is to be attached to the machine spindle (20) in such a manner that the relief portion (13) of the tool holder (10) disengages with the middle portion (23) of the machine spindle (20).
